# EUROPEAN PATENT APPLICATION

(11) **EP 3 456 618 A1**
(43) Date of publication of application: **20.03.2019**
(21) Application number: 18756934.8
(22) Date of filing: 26.02.2018
(51) Int. Cl.: B62K 25/08, B62M 7/12

(54) **MOTORCYCLE**

(30) Priority: 27.02.2017 JP 2017034262
(71) Applicant: Fomm Corporation, Kawasaki-shi, Kanagawa 212-0032 (JP)
(72) Inventor: TSURUMAKI, Hideo, Kawasaki-shi Kanagawa 212-0032 (JP); MORITA, Takayuki, Kawasaki-shi Kanagawa 212-0032 (JP)
(74) Representative: TBK
(86) International application number: PCT/JP2018/006915
(87) International publication number: WO 2018/155679

(57) **Abstract**

A motorcycle includes: a wheel-mounting unit 40 provided with an axle 422 and a hub 424 connected to the axle 422, the axle 422 being configured such that a tip-end side of the axle 422 projects out from a housing 41, and the hub 424 being configured to mount a road wheel 500; a fork support member 24; a first telescopic fork 261 supported by the fork support member 24; a second telescopic fork 262 arranged at a position where a distance from the wheel-mounting unit 40 is different from a distance from the wheel-mounting unit 40 to the first telescopic fork 261; and a third telescopic fork 263 supported by the fork support member 24, the third telescopic fork 263 being arranged such that a distance from the wheel-mounting unit 40 to the third telescopic fork 263 is the same as a distance from the wheel-mounting unit 40 to the second telescopic fork 262, and arranged so as to be positioned further rearward than the second telescopic fork 262 in the frame front-rear direction, wherein the wheel-mounting unit 40 is supported by linking a back surface of the housing 41 to the first to third telescopic forks, the back surface being a surface at an opposite side from a surface of the housing 41 from which the axle projects out.

## Description

### TECHNICAL FIELD

The present invention relates to a motorcycle.

### BACKGROUND ART

In order to improve a maintainability by simplifying changing of a wheel of a motorcycle, the inventors are considering a structure in which a wheel is mounted to a cantilever supported axle. Such a cantilever supported structure of the wheel is also proposed in JP2007-176387A.

### SUMMARY OF INVENTION

However, the structure disclosed in JP2007-176387A is complex and requires specialized parts. Therefore, a production cost is high, and its practicability is low.

The present invention has been conceived in light of the above-described problem. An object of the present invention is to provide a motorcycle with an excellent maintainability and a low production cost.

The present invention provides the following solutions to solve the above-mentioned problems to be solved. In the following, although the reference signs used in the description are given for ease of understanding, there is no limitation thereto. In addition, the configuration described with the reference signs may be replaced or modified appropriately.

One aspect is a motorcycle including: a wheel-mounting unit (40) provided with an axle (422) and a hub (424) connected to the axle (422), the axle (422) being configured such that a tip-end side of the axle (422) projects out from a housing (41), and the hub (424) being configured to mount a road wheel (500); a fork support member (24) connected to a part (21) on a frame side; a first telescopic fork (261) supported by the fork support member (24); a second telescopic fork (262) supported by the fork support member (24), the second telescopic fork (262) being arranged at a position where a distance from the wheel-mounting unit (40) is different from a distance from the wheel-mounting unit (40) to the first telescopic fork (261); and a third telescopic fork (263) supported by the fork support member (24), the third telescopic fork (263) being arranged such that a distance from the wheel-mounting unit (40) to the third telescopic fork (263) is the same as a distance from the wheel-mounting unit (40) to the second telescopic fork (262), and arranged so as to be positioned further rearward than the second telescopic fork (262) in the frame front-rear direction, wherein the wheel-mounting unit (40) is supported by linking a back surface of the housing (41) to the first telescopic fork (261), the second telescopic fork (262), and the third telescopic fork (263), the back surface being a surface at the opposite side from a surface of the housing (41) from which the axle projects out.

### BRIEF DESCRIPTION OF DRAWINGS

FIG. 1 is a left front perspective view showing an embodiment of a motorcycle according to the present invention.
FIG. 2 is a left side view showing the embodiment of the motorcycle according to the present invention.
FIG. 3 is a right front perspective view showing the embodiment of the motorcycle according to the present invention.
FIG. 4 is a right side view showing the embodiment of the motorcycle according to the present invention.
FIG. 5 is a front view showing the embodiment of the motorcycle according to the present invention.
FIG. 6 is a sectional view of a front wheel-mounting unit 40 in a state in which a wheel 50 is mounted, viewed from the front side.
FIG. 7 is a sectional view of a vicinity of a wheel-mounting unit 90 mounted to a vehicle, viewed from the front side.

### DESCRIPTION OF EMBODIMENT

An embodiment of the present invention will be described below with reference to the attached drawings.

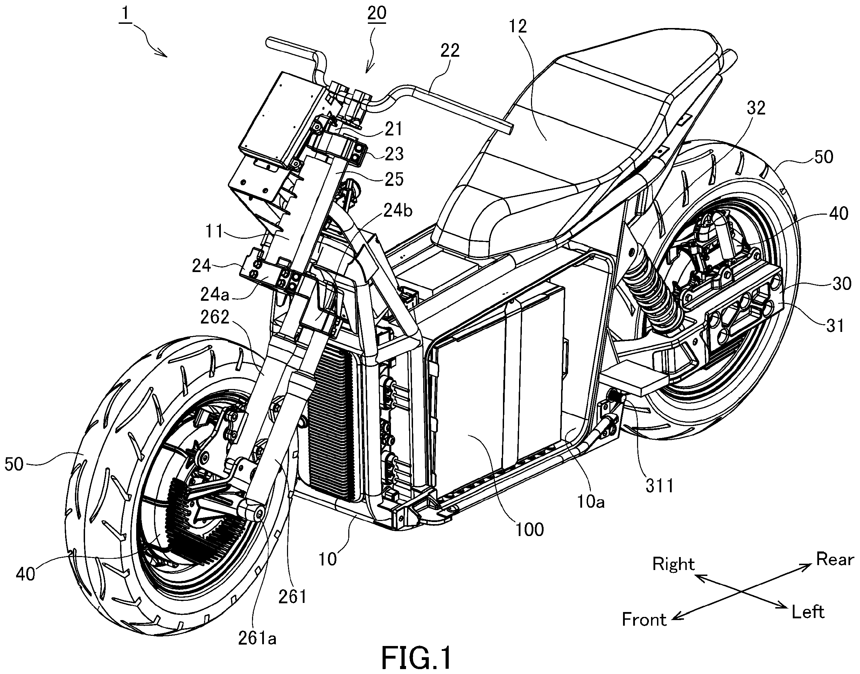

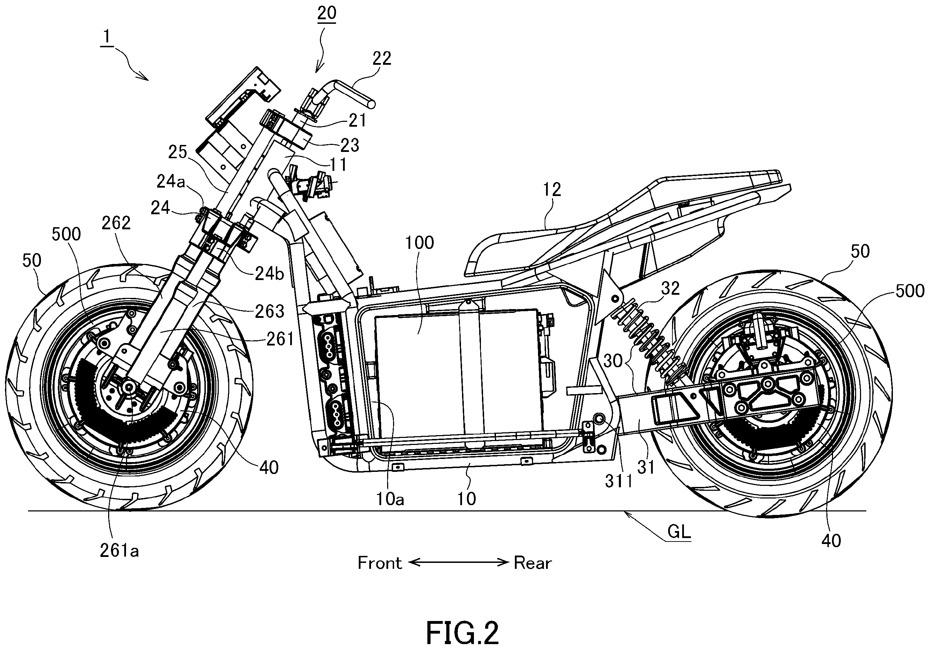

FIG. 1 is a left front perspective view showing an embodiment of a motorcycle according to the present invention. FIG. 2 is a left side view showing the embodiment of the motorcycle according to the present invention.

In the following description, a motorcycle 1 will be described by illustrating a two-wheeled motorbike having a front wheel and a rear wheel that are each driven by an in-wheel electric motor. However, the invention is not limited thereto.

The motorcycle 1 primarily has a frame 10, a steering unit 20, a rear suspension structure 30, front and rear wheel-mounting units 40, and front and rear wheels 50.

The frame 10 is formed by steel pipes. A battery-contain portion 10a is formed at the center of the frame 10, and a battery 100 is mounted in this battery-contain portion 10a. A head tube 11 is fixedly provided on a front end of the frame 10. A seat 12 is provided on the top part of the frame 10.

The steering unit 20 primarily has a steering shaft 21, a handle bar 22, a neck bracket 23, a fork support bracket 24, a bracket connection pipe 25, a first telescopic fork 261, a second telescopic fork 262, and a third telescopic fork 263.

The steering shaft 21 is provided so as to rotatably penetrate through the head tube 11. The handle bar 22 is fixedly provided on the top end of the steering shaft 21. The neck bracket 23 is fixedly provided on an exposed upper part of the head tube 11 of the steering shaft 21. The fork support bracket 24 is fixedly provided on the lower end of the steering shaft 21. As shown in FIG. 1, the fork support bracket 24 includes an upper stepped portion 24a and a lower stepped portion 24b. The lower stepped portion 24b is positioned so as to be parallel to the upper stepped portion 24a and so as to be offset downwards, in other words, shifted downwards with respect to the upper stepped portion 24a. In addition, the lower stepped portion 24b is positioned so as to be farther away from the center of the frame than the upper stepped portion 24a towards the outside. The neck bracket 23 is connected and fixed to the fork support bracket 24 by the bracket connection pipe 25.

The first telescopic fork 261, the second telescopic fork 262, and the third telescopic fork 263 are units having the same size and the same property. These telescopic forks are each formed by slidably inserting an inner tube into an outer tube so as to be extended/contracted freely. The inner tube projects out from the outer tube by a spring force exerted by a spring received in the outer tube. In addition, oil is sealed in the outer tube, and a damping force can be obtained by this oil.

The first telescopic fork 261 is supported by the lower stepped portion 24b of the fork support bracket 24. A hole 261a for inserting a fix bolt is formed on a lower end of the first telescopic fork 261. As described below, the center of this hole 261a is positioned on the axial line of a rotor shaft 422 of an in-wheel motor.

The second telescopic fork 262 is supported by the upper stepped portion 24a of the fork support bracket 24. In addition, as can be seen from the left side view (FIG. 2), the second telescopic fork 262 is positioned further frontward than the first telescopic fork 261 in the front-rear direction of the frame. In addition, as can be seen from the left front perspective view (FIG. 1), the second telescopic fork 262 is arranged so as to be closer to the center of the frame than the first telescopic fork 261.

The third telescopic fork 263 is supported by the upper stepped portion 24a of the fork support bracket 24 so as to extend along the second telescopic fork 262. As can be seen from the left side view (FIG. 2), the third telescopic fork 263 is arranged in parallel with the second telescopic fork 262. The third telescopic fork 263 is positioned further rearward than the first telescopic fork 261 in the front-rear direction of the frame. The distance between the third telescopic fork 263 and the center of the frame is the same as that between the second telescopic fork 262 and the center of the frame, and as described below, the third telescopic fork 263 is hidden behind the second telescopic fork 262 when viewed in the front view.

The rear suspension structure 30 primarily includes a swing arm 31 and a cushion unit 32.

The swing arm 31 is supported to the frame 10 at a shaft 311. The swing arm 31 is provided so as to be rotatable up and down about the shaft 311. As described below, the rear wheel-mounting unit 40 is cantilever supported by the swing arm 31.

The one end of the cushion unit 32 is linked to the frame 10 and the other end thereof is linked to the swing arm 31. The cushion unit 32 is a shock absorber that generates a spring force and a damping force in accordance with the movement of the swing arm 31. The structure of the cushion unit 32 is also similar to the structure of the telescopic forks, and a piston rod is slidably inserted into a cylinder. A spring is arranged around the cylinder and the piston rod, and the piston rod projects out from the cylinder by a spring force exerted by this spring. In addition, oil is sealed in the cylinder, and the damping force can be obtained by this oil.

The front wheel-mounting unit 40 is mounted to the first telescopic fork 261, the second telescopic fork 262, and the third telescopic fork 263. The front wheel 50 is mounted to the front wheel-mounting unit 40.

The rear wheel-mounting unit 40 is mounted to the swing arm 31. The rear wheel 50 is mounted to the rear wheel-mounting unit 40.

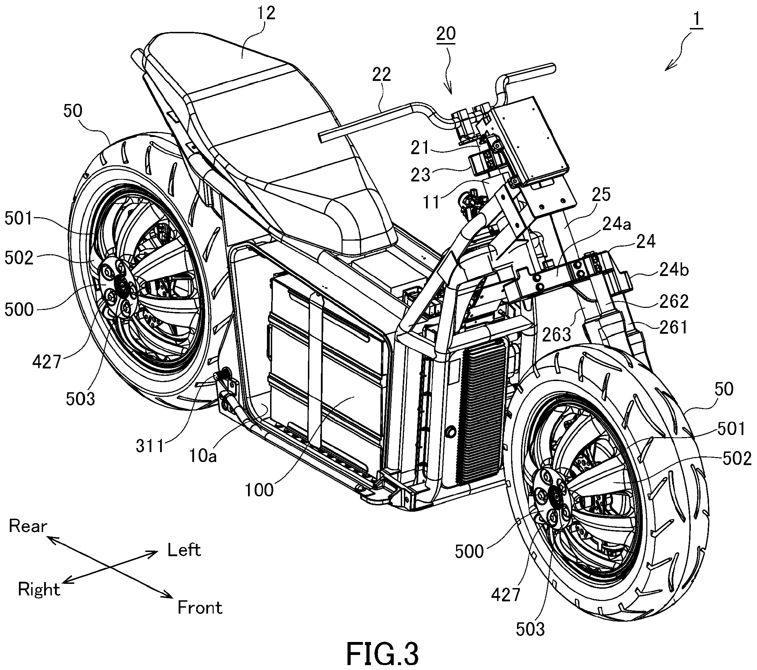

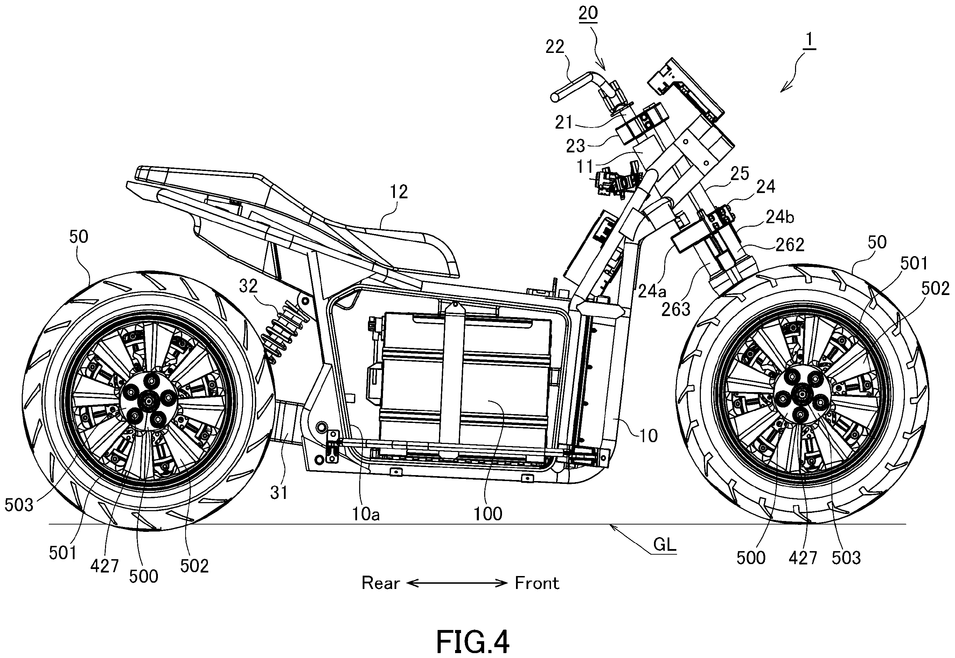

FIG. 3 is a right front perspective view showing the embodiment of the motorcycle according to the present invention. FIG. 4 is a right side view showing the embodiment of the motorcycle according to the present invention.

As can be seen from FIGs. 3 and 4, there is no structure for supporting the front wheel-mounting unit 40 and the rear wheel-mounting unit 40 on the right side of the motorcycle. In other words, the front wheel-mounting unit 40 is cantilever supported by the first telescopic fork 261, the second telescopic fork 262, and the third telescopic fork 263 provided on the left side of the motorcycle. The rear wheel-mounting unit 40 is cantilever supported by the swing arm 31 provided on the left side of the motorcycle.

A front road wheel 500 is inserted into five hub bolts projecting out from a hub of the front wheel-mounting unit 40 and fastened and fixed by wheel nuts 427. The road wheel 500 has eight wheel spokes 502 that connect a peripheral rim 501 and a wheel hub 503. These wheel spokes 502 have a bulging shape from the peripheral rim 501 to the wheel hub 503. In addition, these wheel spokes 502 have a shape in which the leading edge is largely lowered down with respect to the trailing edge in the rotation direction when the motorcycle 1 moves forward. Because the wheel spokes 502 have such a shape, air is easily taken into the road wheel 500, and it is possible to achieve high cooling performance for the in-wheel motor and a brake. Therefore, the power performance and the brake performance of the in-wheel motor can easily be maintained at a high state.

The rear road wheel 500 is inserted into five hub bolts projecting out from the hub of the rear wheel-mounting unit 40 and fastened and fixed by the wheel nuts 427. The front road wheel 500 is identical to the rear road wheel 500, and they can be exchanged with each other.

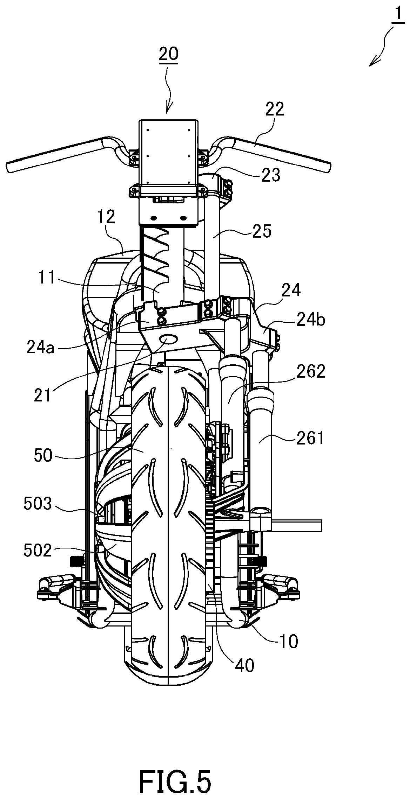

FIG. 5 is a front view showing the embodiment of the motorcycle according to the present invention.

As can be seen from FIG. 5, when viewed in a front view, the third telescopic fork 263 is positioned so as to be hidden behind the second telescopic fork 262. In other words, the second telescopic fork 262 and the third telescopic fork 263 are arranged at the same positions in the axial direction of the rotor shaft of the in-wheel motor, and thus, the third telescopic fork 263 is hidden behind the second telescopic fork 262 when viewed in front view. In addition, as can be seen from the front view in FIG. 5, the wheel spokes 502 of the road wheel 500 have a shape in which the wheel spokes 502 largely bulge out from the peripheral rim 501 to the wheel hub 503 so as to protrude outwards from the side surface of the wheel. Because the wheel spokes 502 have a shape in which the leading edge is largely lowered down with respect to trailing edge in the rotation direction when the motorcycle 1 moves forward, air is easily taken into the road wheel 500, and it is possible to achieve high cooling performance for the in-wheel motor and a brake. Therefore, the power performance and the brake performance of the in-wheel motor can easily be maintained at a high state. Although the wheel spokes 502 of the road wheel 500 have a shape in which the wheel spokes 502 largely bulge out from the peripheral rim 501 to the wheel hub 503 so as to protrude outwards from the side surface of the wheel, as can be seen from FIG. 5, the wheel spokes 502 do not protrude outwards from the side surface of the frame when viewed in the front view. Because the wheel spokes 502 have such a configuration, even in the event of falling over, it is possible to reduce the damage of the road wheel 500.

A wheel-mounting unit 90 used for a vehicle is diverted to the front and rear wheel-mounting units 40. Thus, the wheel-mounting unit 90 for the vehicle will be described first.

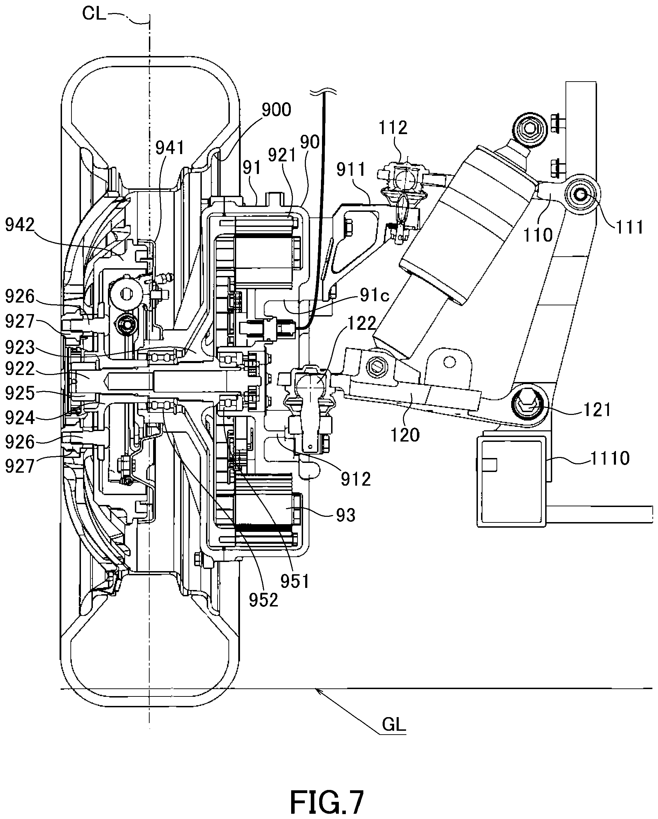

FIG. 7 is a sectional view of a vicinity of the wheel-mounting unit 90 mounted to the vehicle, viewed from the front.

The wheel-mounting unit 90 for the vehicle is the in-wheel motor arranged inside a road wheel 900. The wheel-mounting unit 90 for the vehicle includes a motor housing 91, a rotor 92, a stator (stator core) 93, and a brake unit 94.

The motor housing 91 is a case for housing the rotor 92 and the stator 93. On the back surface of the motor housing 91, an upper bracket 911 for mounting an upper ball joint 112 and a lower bracket 912 for mounting a lower ball joint 122 are mounted.

The rotor 92 includes a rotor core 921, a rotor shaft 922, and a connection member 923. The rotor core 921 has a short-shaft-thick-wall-cylinder shape (doughnut-shape) and is arranged immediately inside the motor housing 91. The rotor shaft 922 is supported in the motor housing 91 via a single row bearing 951 and a double row bearing 952. The single row bearing 951 is the most back-end side bearing of the rotor shaft 922. The double row bearing 952 is the most tip-end side bearing of the rotor shaft 922. The double row bearing 952 is positioned on the center line of the tire. The tip end of the rotor shaft 922 projects out from the motor housing 91. A hub 924 is spline fitted to this projected part of the rotor shaft 922 and is fastened and fixed by a nut 925. With the structure described above, the hub 924 rotates together with the rotor shaft 922 in an integral manner. Hub bolts 926 project out from the hub 924. Wheel nuts 927 are used to fasten the road wheel 900 to these hub bolts 926. The connection member 923 is fastened to the rotor core 921 using bolts and is spline fitted to the rotor shaft 922.

The stator (stator core) 93 has a short-shaft-thick-wall-cylinder shape (doughnut-shape) and is fixed to the motor housing 91 by being arranged immediately inside the rotor core 921.

In the wheel-mounting unit 90 for the vehicle shown in this diagram, the brake unit 94 is a drum brake. In the brake unit 94, a brake cylinder, a brake shoe, and so forth are housed in a back plate 941 and a brake drum 942. The back plate 941 is fixed to the motor housing 91. The brake drum 942 rotates together with the hub 924 (the rotor shaft 922) in an integral manner.

Because of such a structure described above, as the rotor core 921 is rotated, the rotor shaft 922 is also rotated together therewith in an integral manner to rotate the hub 924, and thereby, the wheel is driven. When the brake shoe (lining) is pressed against an inner circumferential surface of the brake drum 942 by a force exerted by the brake cylinder, the brake is applied to the rotation of the brake drum 942 (the hub 924). Although a drum brake is illustrated as the brake unit 94 in this example, the similar effect can be achieved by a disc brake.

The wheel-mounting unit 90 as described above is supported by a vehicle frame 1110 by being linked to an upper arm (upper suspension arm) 110 via the upper ball joint 112 that is mounted to the upper bracket 911 and by being linked to a lower arm (lower suspension arm) 120 via the lower ball joint 122 that is mounted to the lower bracket 912.

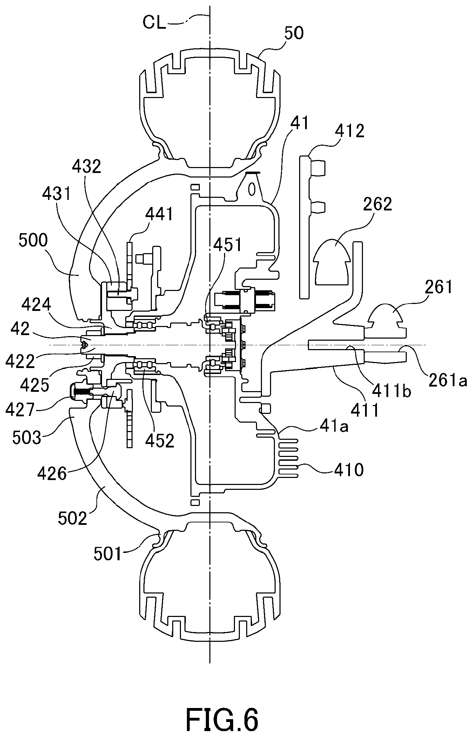

The basic structure of the front and rear wheel-mounting units 40 used in this embodiment is also the same as that of the wheel-mounting unit 90 of the vehicle described above. Next, the front wheel-mounting unit 40 will be described with reference to FIG. 6.

FIG. 6 is a sectional view of the front wheel-mounting unit 40 in a state the wheel 50 is mounted, viewed from the front. In order to simplify the figure, a stator (a stator core), etc. are omitted.

The basic structure of the front wheel-mounting unit 40 used in this embodiment is also the similar as that of the wheel-mounting unit 90 of the vehicle described above, and the front wheel-mounting unit 40 includes a motor housing 41, a rotor 42, a stator (a stator core) (not shown), and a brake unit 44.

The motor housing 41 is a case for housing the rotor 42 and the stator. Although the configuration of the motor housing 41 is essentially the same as that of the motor housing 91 of the wheel-mounting unit 90 for the vehicle, fins 410 are formed on a back surface 41a in this case. However, the fins 410 may not necessarily be provided, and as shown in FIG. 7, fins may not be formed as the in-wheel motor for the vehicle (the wheel-mounting unit 90). In addition, instead of the upper bracket 911 and the lower bracket 912 that are mounted to a back surface of the wheel-mounting unit 90 for the vehicle, a lower bracket 411 for linking the first telescopic fork 261 and an upper bracket 412 for linking the second telescopic fork 262 and the third telescopic fork 263 are mounted. A bolt hole 411b is threaded to the lower bracket 411 for linking the first telescopic fork 261. The center of the bolt hole 411b is positioned on the axial line of the rotor 42 (the rotor shaft 422). In addition, although not shown in FIG. 6, bolt holes are threaded to the upper bracket 412 for linking the second telescopic fork 262 and the third telescopic fork 263. The centers of these bolt holes are positioned so as to be offset upwards with respect to the bolt hole 411b, in other words, these bolt holes are positioned so as to be shifted with respect to the bolt hole 41 1b. The offset amount between them is the same as the offset amount between the upper stepped portion 24a and the lower stepped portion 24b of the fork support bracket 24. In other words, the length of the first telescopic fork 261 that is supported by the lower stepped portion 24b of the fork support bracket 24 and that is mounted with the lower bracket 411 is the same as the lengths of the second telescopic fork 262 and the third telescopic fork 263 that are supported by the upper stepped portion 24a of the fork support bracket 24 and that are mounted with the upper bracket 412.

Similarly to the wheel-mounting unit 90 described above, the rotor 42 is provided with a rotor core and connection members in addition to the rotor shaft 422, which is illustrated; however, illustrations thereof are omitted. The configuration of the rotor shaft 422 is also the same as that of the rotor shaft 922 of the wheel-mounting unit 90 for the vehicle, and the rotor shaft 422 is supported in the motor housing 41 via a single row bearing 451 and a double row bearing 452. The single row bearing 451 is positioned on the center line of the frame. As described above, when the wheel-mounting unit 90 is mounted to the vehicle, the double row bearing 952 that is a tip-end side bearing of the rotor shaft 922 is arranged so as to be positioned on the center line of the tire. However, when the wheel-mounting unit 40 is mounted to the motorcycle, if the wheel-mounting unit 40 is arranged in the similar manner, the back surface of the wheel-mounting unit 40 projects out greatly from the road wheel 500. In such a case, the telescopic forks also need to be offset from the center of the frame, and a balance becomes poor. In contrast, in this embodiment, because the single row bearing 452 that is the back-end side bearing of the rotor shaft 422 is arranged so as to be positioned on the center line of the tire, it is possible to bring the telescopic forks closer to the center of the frame, thereby achieving the arrangement with a good balance.

The tip end of the rotor shaft 422 projects out from the motor housing 41. A hub 424 is spline fitted to this projected portion and is fastened and fixed by a nut 425. In addition, in this FIG. 6, the disc brake is used as the brake. A brake disc 441 is fastened by a bolt 432 to a spacer 431. A hub bolt 426 is press-fitted into the spacer 431, and the hub bolt 426 projects out from the hole made in the hub 424. A road wheel 400 is fastened to the hub bolt 426 by the wheel nuts 427. With the structure described above, the road wheel 400 is in a cantilever supported state. Similarly to the above-mentioned wheel-mounting unit 90, the rotor core (not shown) also has the short-shaft-thick-wall-cylinder shape (doughnut-shape) and is arranged immediately inside the motor housing 41. In addition, the connection member is bolt fastened to the rotor core and is spline fitted to the rotor shaft 422.

With the structure described above, as the rotor core is rotated, the rotor shaft 422 is also rotated together therewith in an integral manner to rotate the hub 424, and thereby, the road wheel 400 is driven. When a brake pad is pressed against the brake disc 441, a braking force is generated.

The front wheel-mounting unit 40 as described above is cantilever supported by the steering unit 20 by being linked to the first telescopic fork 261 via the lower bracket 411 and by being linked to the second telescopic fork 262 and the third telescopic fork 263 via the upper bracket 412. As described above, because the center of the bolt hole 411b that is threaded to the lower bracket 411 is positioned on the axial line of the rotor shaft 422, the mounting center of the first telescopic fork 261 coincides with the axial line of the rotor shaft 422. In addition, the mounting centers of the second telescopic fork 262 and the third telescopic fork 263 are offset upwards with respect to the mounting center of the first telescopic fork 261, and the offset amount therebetween is the same as the offset amount between the upper stepped portion 24a and the lower stepped portion 24b of the fork support bracket 24. Therefore, the lengths of the first telescopic fork 261, the second telescopic fork 262, and the third telescopic fork 263 are the same.

The basic structure of the rear the wheel-mounting unit 40 is also the similar to that of the front wheel-mounting unit 40, and a description thereof is omitted. Although the front wheel-mounting unit 40 is linked to the first telescopic fork 261 via the lower bracket 411 and is linked to the second telescopic fork 262 and the third telescopic fork 263 via the upper bracket 412, the rear the wheel-mounting unit 40 is linked to the swing arm 31 via the bracket of the back surface.

### (Operations and Effects)

With this embodiment, because of the structure in which the wheel-mounting unit 40 (the rotor shaft 422) is cantilever supported, it is easy to mount and demount and/or change the wheel 50, and the excellent maintainability can be achieved.

In addition, in order to support the wheel-mounting unit 40 (the rotor shaft 422) in a cantilever manner, the telescopic fork needs to be arranged only on one side of the frame. In such a case, a bending load tends to act on the telescopic fork, and due to this bending load, a slidability between the outer tube and the inner tube is deteriorated, causing the stroke of the telescopic fork to be hindered. In contrast, according to this embodiment, because the wheel-mounting unit 40 is supported by the three telescopic forks, it is possible to adequately maintain the slidability between the outer tube and the inner tube, and to prevent occurrence of an event in which the stroke of the telescopic forks is hindered.

Especially, with this embodiment, among the three telescopic forks, two telescopic forks (the second telescopic fork 262 and the third telescopic fork 263) are arranged at the equal distances from the wheel-mounting unit 40 in the front-rear direction, and one telescopic fork (the first telescopic fork 261) is arranged so as to be positioned to have a distance from the wheel-mounting unit 40 that is different from the distances of the two telescopic forks from the wheel-mounting unit 40 such that the one telescopic fork is positioned farther away from the wheel-mounting unit 40 than the two telescopic forks. With such a configuration: even in a situation in which a load is applied in the front-rear direction of the motorcycle such as when a brake is applied, it is possible to adequately maintain the slidability of the telescopic forks; and at the same time, even in a situation in which a load is applied to the telescopic forks in the cross direction of the motorcycle such as when the motorcycle is running in a corner or in a rough road, it is possible to adequately maintain the slidability of the telescopic forks, and thus, a considerable advantage is afforded. Among the three telescopic forks, the two telescopic forks (the second telescopic fork 262 and the third telescopic fork 263) may be arranged at the equal distances from the wheel-mounting unit 40 in the front-rear direction, and the one telescopic fork (the first telescopic fork 261) may be arranged so as to be positioned to have a distance from the wheel-mounting unit 40 that is different from the distances of the two telescopic forks from the wheel-mounting unit 40 such that the one telescopic fork comes closer to the wheel-mounting unit 40.

Furthermore, in this embodiment, a linking point of the first telescopic fork 261 is positioned on the axial line of the rotor shaft 422 of the wheel-mounting unit 40. With this embodiment, because the wheel-mounting unit 40 is cantilever supported, the bending load tends to act on the telescopic fork. Although moment acting on the telescopic fork is increased as the linking point of the telescopic fork is separated away from the axial line of the rotor shaft 422 of the wheel-mounting unit, as in this embodiment, it is possible to suppress the effect of the bending load by arranging the linking point of the telescopic fork on the axial line of the rotor shaft 422 of the wheel-mounting unit 40.

Furthermore, the linking points of the second telescopic fork 262 and the third telescopic fork 263 are positioned above the linking point of the first telescopic fork 261. Assuming the case in which the second telescopic fork 262 and the third telescopic fork 263 are not provided and the wheel-mounting unit 40 is cantilever supported only by the first telescopic fork 261, the wheel-mounting unit 40 tends to sway about the linking point of the first telescopic fork 261 as the center. In contrast, as in this embodiment, by arranging the linking points of the second telescopic fork 262 and the third telescopic fork 263 at positions offset upwards with respect to the linking point of the first telescopic fork 261, it is possible to suppress the sway of the wheel-mounting unit 40, and thus, it is possible to adequately maintain the slidability of the telescopic forks.

In addition, in this embodiment, the upper stepped portion 24a is offset from the lower stepped portion 24b of the fork support bracket 24 such that the offset amount thereof is the same as the offset amount between the linking point of the first telescopic fork 261 and the linking points of the second telescopic fork 262 and the third telescopic fork 263. Therefore, because the lengths of the first telescopic fork 261, the second telescopic fork 262, and the third telescopic fork 263 are the same, the telescopic forks having the same size and the same property can be used as the first telescopic fork 261, the second telescopic fork 262, and the third telescopic fork 263. Therefore, it is possible to suppress the production cost.

In addition, the in-wheel motors having essentially the same structure are used as the front wheel-mounting unit 40 and the rear the wheel-mounting unit 40, and thereby, it is also possible to suppress the production cost. Furthermore, by diverting the in-wheel motor for electric vehicles, it is possible to achieve a large economical effect due to volume production, and therefore, it is possible to greatly suppress the production cost.

Furthermore, in this embodiment, the single row bearing 451 that is the back-end side bearing of the rotor shaft 422 is positioned on the center line of the frame. With such a configuration, it is possible to bring the telescopic forks closer to the center of the frame, thereby achieving the arrangement with good balance. In addition, because the bearing is positioned on the center line of the frame (the center line of the tire), a reinforcement against input from a road surface is achieved, and it is possible to improve durability performance of the wheel-mounting unit 40.

Furthermore, in this embodiment, the first telescopic fork 261, the second telescopic fork 262, the third telescopic fork 263, and the swing arm 31 are arranged on the left side of the frame, and the road wheel 500 is arranged on the right side of the frame. A stand (side stand) of the motorcycle (two-wheeled motorbike) is generally arranged on the left side of the frame, and a driver also gets on and off on the left side of the frame. As described in this embodiment, by arranging the first telescopic fork 261, the second telescopic fork 262, the third telescopic fork 263, and the swing arm 31 on the left side of the frame, and by arranging the road wheel 500 on the right side of the frame, when the driver pushes the motorcycle, for example, because the driver stands on the other side of the road wheel, an excellent appearance of the road wheel 500 is enhanced, and a silhouette of the motorcycle 1 will look attractive.

In the above-mentioned embodiment, although a description has been given of an example in which a configuration is provided with the three telescopic forks, the first telescopic fork 261, the second telescopic fork 262, and the third telescopic fork 263, the number of telescopic forks is not limited to three, and it is even possible to achieve corresponding effects by supporting the wheel-mounting unit 40 (the rotor shaft 422) in a cantilever manner by two telescopic forks (for example, the first telescopic fork 261 and the second telescopic fork 262/the first telescopic fork 261 and the third telescopic fork 263) that are arranged at different positions in the front-rear direction of the frame and arranged at different distances from the wheel-mounting unit 40 (the distance in the axle direction).

Furthermore, even by supporting the wheel-mounting unit 40 (the rotor shaft 422) in a cantilever manner by two telescopic forks that are arranged at the same position in the front-rear direction of the frame, but arranged at different distances from the wheel-mounting unit 40 (the distance in the axle direction) so as to be arranged in the cross direction, it is possible to reduce the effect of the load that acts on the respective telescopic forks, and thus, it is possible to adequately maintain the slidability of the telescopic forks even in a situation in which a load is applied to the telescopic forks in the cross direction of the motorcycle such as when the motorcycle is running in a corner or in a rough road. The corresponding effects can also be achieved even in a situation in which a load is applied in the front-rear direction of the motorcycle such as when a brake is applied.

Although the embodiment of the present invention has been described above, the above-mentioned embodiment is merely an illustration of a part of an application example of the present invention, and there is no intention to limit the technical scope of the present invention to the specific configuration of the above-mentioned embodiment.

For example, in the above-mentioned description, the configuration in which the front wheel-mounting unit 40 is supported by a plurality of telescopic forks has been illustrated; however, the configuration is not limited thereto. A configuration in which the rear the wheel-mounting unit 40 is supported by the plurality of telescopic forks may be employed. In other words, in the above description, although the rear the wheel-mounting unit 40 is cantilever supported by the swing arm 31, similarly to the front wheel-mounting unit 40, the rear the wheel-mounting unit 40 may also be cantilever supported by the plurality of telescopic forks.

In addition, in the above-mentioned description, the configuration in which the in-wheel motor is employed as the wheel-mounting unit 40 has been described with the illustrations thereof; however, it is not essential to employ the in-wheel motor. For example, although the axle (the rotor shaft 422) is supported in the above-mentioned motor housing 41, a unit may be configured without the rotor core and/or the connection member. Such a unit may be applied to a conventional motorcycle (two-wheeled motorbike) in which a driving force is generated by an internal-combustion engine, etc., for example, or a motorcycle (two-wheeled motorbike) of a type in which the driving force is generated only on one wheel (for example, a rear wheel) by using an electric motor.

For example, in the above-mentioned description, a two-wheeled motorbike having one wheel for each of the front wheel and the rear wheel has been described with the illustrations as the motorcycle 1; however, the configuration is not limited thereto. The present invention may also be applied to a motorbike of the type having two front wheels, a motorbike of the type having two rear wheels, or a motorbike of the type having two wheels for each of the front wheel and the rear wheel.

The above-mentioned embodiments may be combined appropriately.

The present application claims priority to Japanese Patent Application No. 2017-34262, filed in the Japan Patent Office on February 27, 2017. The contents of this application are incorporated herein by reference in their entirety.

## Claims

1. A motorcycle comprising:
a wheel-mounting unit provided with an axle and a hub connected to the axle, the axle being configured such that a tip-end side of the axle projects out from a housing, and the hub being configured to mount a road wheel;
a fork support member connected to a part on a frame side;
a first telescopic fork supported by the fork support member;
a second telescopic fork supported by the fork support member, the second telescopic fork being arranged at a position where a distance from the wheel-mounting unit is different from a distance from the wheel-mounting unit to the first telescopic fork; and
a third telescopic fork supported by the fork support member, the third telescopic fork being arranged such that a distance from the wheel-mounting unit to the third telescopic fork is same as a distance from the wheel-mounting unit to the second telescopic fork, and arranged so as to be positioned further rearward than the second telescopic fork in a frame front-rear direction; wherein
the wheel-mounting unit is supported by linking a back surface of the housing to the first telescopic fork, the second telescopic fork, and the third telescopic fork, the back surface being a surface at an opposite side from a surface of the housing from which the axle projects out.

2. The motorcycle according to claim 1, wherein
the wheel-mounting unit is configured with an in-wheel motor arranged inside the road wheel, the in-wheel motor being provided with a rotor shaft as the axle.

3. The motorcycle according to claim 2, wherein
an in-wheel motor used for an electric vehicle is diverted to the in-wheel motor.

4. The motorcycle according to any one of claims 1 to 3, wherein
the part on the frame side is a steering shaft penetrating through a head tube of a frame, the steering shaft being mounted with a handle bar at a portion above the head tube, and the steering shaft being connected with the fork support member at a portion below the head tube.

5. The motorcycle according to any one of claims 1 to 4, wherein
a position at which the wheel-mounting unit is linked to the first telescopic fork is on an axial line of the axle.

6. The motorcycle according to any one of claims 1 to 5, wherein
the first telescopic fork, the second telescopic fork, and the third telescopic fork are arranged on a left side of the frame.

7. The motorcycle according to any one of claims 1 to 6, wherein
the axle is supported by a bearing positioned at an axle tip-end side and by a bearing positioned at an axle back-end side and arranged so as to intersect with a frame center line.

8. The motorcycle according to any one of claims 1 to 7, wherein
a wheel spoke of the road wheel has a shape that bulges from a peripheral rim to a wheel hub and a shape in which a leading edge is largely lowered down with respect to a trailing edge in a rotation direction.

9. A motorcycle comprising:
a wheel-mounting unit provided with an axle and a hub connected to the axle, the axle being configured such that a tip-end side of the axle projects out from a housing, and the hub being configured to mount a road wheel;
a fork support member connected to a part on a frame side;
a first telescopic fork supported by the fork support member; and
a second telescopic fork supported by the fork support member, the second telescopic fork being arranged at a position where a distance from the wheel-mounting unit is different from a distance from the wheel-mounting unit to the first telescopic fork; wherein
the wheel-mounting unit is supported by linking a back surface of the housing to the first telescopic fork and the second telescopic fork, the back surface being a surface at an opposite side from a surface of the housing from which the axle projects out.
